# EUROPEAN PATENT APPLICATION

(11) **EP 2 218 335 A1**
(43) Date of publication of application: **18.08.2010**
(21) Application number: 08842592.1
(22) Date of filing: 16.10.2008
(51) Int. Cl.: A23G 9/50, B65D 85/78, B65D 83/00

(54) **FOODS DISPENSING CONTAINER**

(30) Priority: 22.10.2007 ES 200702138 U
(71) Applicant: Big Drum S.L., 43205 Reus Tarragona (ES)
(72) Inventor: VECIANA MEMBRADO, Josep, Maria, E-43205 Reus (Tarragona) (ES)
(74) Representative: Carpintero Lopez, Francisco
(86) International application number: PCT/ES2008/000646
(87) International publication number: WO 2009/053505

(57) **Abstract**

The present invention relates to a food dispensing container, for example for ice-cream, consisting of a hollow body (1) formed from sheets, with a first end (2) and a second end (3). The opening (4) of the body (1) located at the first end (2) is made such that it has a thicknessing (5) in its entire perimeter. Said thicknessing (5) is a fold of the first end (2) of the body (1) over itself outwardly from said body (1), such that the free end of the first end (2) is housed inside the thicknessing (5). Therefore, possible irregularities that may occur when cutting the sheets or residues of said cutting are confined inside the thicknessing (5), such that the users of the container are not harmed by said irregularities nor do they ingest the residues of the cutting.

## Description

### Field of the Invention

The present invention belongs to the field of food dispensing containers, more specifically of ice-cream dispensers.

### Background of the Invention

Push-up type food dispensing containers in which the food, preferably ice-cream, is contained in a cylinder and the ice-cream is dispensed by means of a piston as the consumer requires, are known in the state of the art. The proprietor of this utility model application is the proprietor of a series of these devices, including the following publications: ES 2 251 306 A1, ES 2 246 148 A1, ES 1 035 725 U and ES 1 007 878 U.

All the devices shown in the previous documents have the drawback of including a type of decoration done with dyes on their outer surface, and these dyes can be transferred to users when they involuntarily lick the ice-cream container. In the same manner, the perimetric edge of the container is not reinforced, so it gradually deteriorates as the consumer eats the ice-cream, so the dye can also thus be involuntarily ingested. This all constitutes a health risk given that the dyes may not be suitable for direct contact with foods or for being ingested.

Additionally, starting from an elongated element, the different containers are obtained by cutting said element. Possible flaws can thus occur when cutting, or a residue may adhere to the edge of said container. Both the possible flaws in the cut and the residues that may remain after making said cut are possible risk elements because, as mentioned, the users may lick the container, ingesting the remains, or they may injure themselves with any of the possible flaws.

Finally, there is an insufficient surface area in the opening of the container to seal the closure of the container. Therefore, it is necessary to resort to using glues in the area of the container close to the opening to adhere the lid to the container, with the risk that traces of these glues will remain after removing the lid from the container and will be ingested by the consumers.

### Description of the Invention

The invention relates to a food dispensing container having a hollow body formed from sheets, of paperboard or any other material, which allows obtaining a substantially cylindrical configuration, with a first end and a second end, which contains food, preferably ice-cream.

According to the invention, the opening of the body located at the first end has a thicknessing in its entire perimeter. Said thicknessing consists of a fold of the first end of the body over itself outwardly from said body, such that the free end of the first end is housed inside the thicknessing. Additionally the inner face of the body is located outside the same in the thicknessing made.

Since the free end of the first end is housed inside the thicknessing, any irregularity that may occur when cutting the body of the container or any residue not eliminated remains enclosed in the thicknessing. Therefore, the thicknessing allows absorbing any defect in the method used to make the body of the container.

The sheets can comprise an inner layer with respect to the tube once it is assembled, made of a hydrophobic material. Said material waterproofs and prevents the diffusion of the dyes applied in the sheet. Said hydrophobic material could be, for example, polyethylene.

In the assembly of the container, the inner layer of the sheets is arranged inside the container, such that this layer in the thicknessing is on the visible exterior of the container. Therefore, there will be no risk that the user will come into contact with the dyes of the container when consuming the ice-cream given that, first of all, the thicknessing provides a first action of defense and, second of all, because the hydrophobic material applied will make any possible transfer from the container to the exterior impossible.

Additionally, the sheets can comprise an outer layer with respect to the tube once it is formed. Said outer layer could be a plastic layer, such that the tube is coated in its outer area with plastic. The dyes will thus be located between the plastic and the paperboard, preventing any accidental contact when consuming the ice-cream.

Additionally, given the insulating and waterproofing character of the two protective layers, as well as the reinforcement provided by the thicknessing, the action of the consumer ingesting the ice-cream will not degrade the container, so the latter will remain intact after having finished the ice-cream without any erosion of the body occurring, with the possible contamination of the user by ingesting dye. In the same manner, the existence of the food inside the container, for example melted ice-cream, will not affect the container given that the waterproof inner layer will be located between the paperboard of the body and the melted ice-cream, for example.

The thicknessing allows the increase of the surface at the first end. This fact together with the presence of the inner layer made of polyethylene makes it possible to seal the opening of the container by means of a heat seal. This option was not previously viable given that there was insufficient surface to enable said sealing. It is thus possible to prevent the need to use glues or adhesives and to prevent the residues that such glues or adhesives leave behind from altering the flavor of the ice-cream contained in the device or from negatively affecting people's health. Additionally, the closure by means of a heat seal does not leave behind residues of any type, as in the case of using glues.

Push means by way of a piston can be connected at the second end of the main body, which means determine the progressive exit for consuming the food in the container.

### Description of the Drawings

To complement the description that is being made and for the purpose of aiding to better understand the features of the invention, a set of drawings is attached as an integral part of said description in which the following has been depicted with an illustrative and non-limiting character:
Figure 1 shows a view of the food dispensing container according to a preferred embodiment of the invention.
Figure 2 shows a cross-sectional view of the dispensing container according to line AA' defined in Figure 1 and a detail view of the area of the thicknessing.

### Preferred Embodiment of the Invention

A preferred embodiment of the food dispensing container constituting the object of this invention is described below with reference to the drawings.

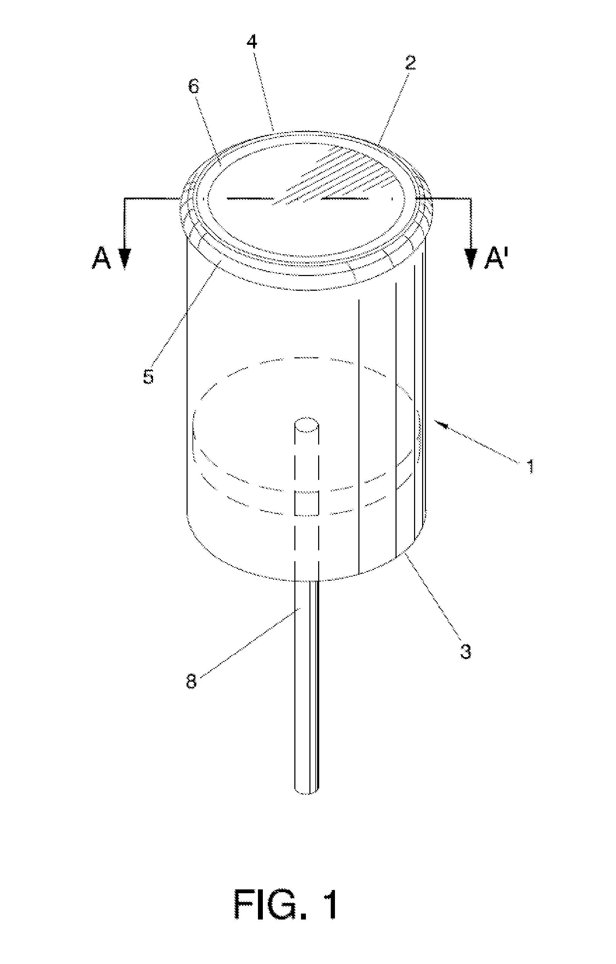

Figure 1 shows a preferred embodiment of the food dispensing container, in this case for dispensing ice-cream. Said figure shows the body (1) of the container having a substantially cylindrical shape, provided with a piston (8) for driving the ice-cream.

In the opening (4) of the container, located at a first end (2) of the container, it can be seen how the end of the container is not sharp, such as what a cut sheet or paperboard would leave behind, but rather it is blunt due to the thicknessing (5) made. The figure also shows the heat seal (6) carried out. As can be seen, said heat seal (6) could be done on the surface that is left unoccupied by the thicknessing (5) produced in the opening (4) of the body (1).

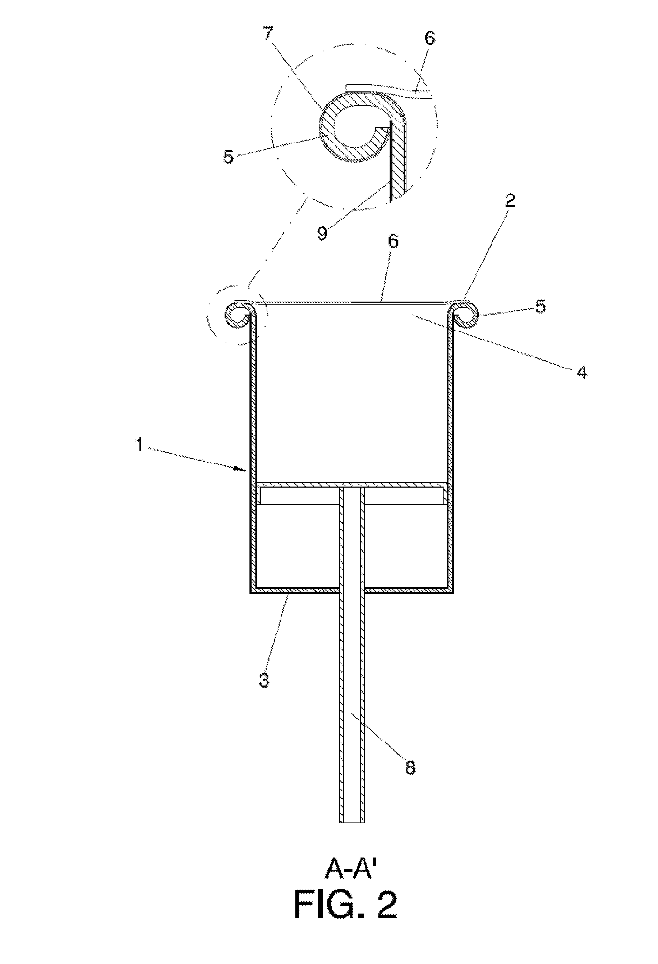

Figure 2 shows a cross-section according to line AA' shown in Figure 1. Said cross-section allows seeing the thicknessing (5) made at the first end (2) of the container. Said thicknessing (5) is produced by means of folding the material of the sheets forming the body (1) of the container by turning the sheet over on itself in the entire perimeter of the opening (4), such that the surface of the container that was located inside the container is located outside the same in the thicknessing (5).

Folding the sheet and the fact that the perimetric edge of the body (1) is housed inside the thicknessing (5) allows canceling out any negative effect that the flaws in the cut or any type of residue that may have adhered to the opening (4) of the container may have.

The sheet forming the container has at least three layers, one of them being the layer which gives the container consistency, preferably paperboard, whereas the inner layer (7) is made of a hydrophobic material, polyethylene, and the outer layer (9) of a plastic material. Said layers can be seen in the detail view of Figure 2. The inner layer (7) is located in the body (1) in its inner part, whereas when the thicknessing (5) is made, said inner layer (7) is on the outside of the body (1). It will thus be impossible for anyone consuming the ice-cream contained in the container to ingest part of the dye that is applied to the container, given that the tongue will come into contact with the thicknessing (5) made. The outer layer (9) covers the layer of paperboard on the outside of the body (1) and collaborates with the inner layer (7) in the action of protecting the user. All the dyes will be confined by said outer layer (9), making any accidental contact with the dyes used in decorating the container impossible.

Additionally, the inner layer (7) allows said consumers when eating the ice-cream to degrade or erode the container, with the possible subsequent ingestion of the dyes used to decorate it. The inner layer (7) allows means that the size or shape of the container will not become deformed or be modified when the ice-cream melts given that said protective inner layer (7) is waterproof and does not allow the ice-cream to be in contact with the paperboard of the container.

As can be seen in the detail view of Figure 2, it is possible to perform the heat seal (6) of the container since the opening (4) has the sufficient surface and a suitable base for performing this action, i.e., waterproof polyethylene. In a container in which this thicknessing (5) is not made, heat seal (6) is not possible since there is not sufficient surface to be able to adhere a sheet in the opening (4), making it necessary to resort to adhering the lid by means of gums or adhesives in the perimeter of the container close to the opening (4).

In view of this description and set of drawings, the person skilled in the art will understand that the invention has been described according to a preferred embodiment thereof, but that multiple variations can be introduced in said preferred embodiment without departing from the object of the invention as it has been claimed.

## Claims

1. Food dispensing container having a hollow body (1) formed from sheets, with a first end (2) and a second end (3), containing food,
**characterized in that**
the opening (4) of the body (1) located at the first end (2) has a thicknessing (5) in its entire perimeter, said thicknessing (5) is a fold of the first end (2) of the body (1) over itself outwardly from said body (1), such that the free end of the first end (2) is housed inside the thicknessing (5).

2. Container according to claim 1, **characterized in that** the sheets comprise an inner layer (7) made of a hydrophobic material.

3. Container according to claim 2, **characterized in that** the hydrophobic material is polyethylene.

4. Container according to any of claims 2-3, **characterized in that** the inner layer (7) of the sheets is located in the inner part of the body (1).

5. Container according to any of claims 1-4, **characterized in that** the sheets comprise an outer layer (9) made of a plastic material, said outer layer (9) being located in the outer part of the body (1).

6. Container according to claim 4, **characterized in that** the opening (4) of the body (1) is sealed by means of a heat seal (6).

7. Container according to any of claims 1-6, **characterized in that** push means (8) by way of a piston are connected at the second end (2) of the body (1), which means determine the progressive exit for consuming the food in the container.
